# FASCICULE DE BREVET EUROPEEN

(11) **EP 2 786 102 B1**
(45) Date de publication et mention de la délivrance du brevet: **28.10.2015**
(21) Numéro de dépôt: 12791175.8
(22) Date de dépôt: 23.11.2012
(51) Int. Cl.: G01G 13/00, G01N 1/20, G01F 11/40

(54) **DISPOSITIF DE DISTRIBUTION DE POUDRE, BOUCHON POUR UN TEL DISPOSITIF ET STATION DE TRAVAIL COMPRENANT UN TEL DISPOSITIF**
VORRICHTUNG ZUR ABGABE EINES PULVERS, KAPPE FÜR EINE SOLCHE VORRICHTUNG UND ARBEITSPLATZ MIT EINER DERARTIGEN VORRICHTUNG
DEVICE FOR DISPENSING POWDER, CAP FOR SUCH A DEVICE AND WORKSTATION COMPRISING SUCH A DEVICE

(30) Priorité: 30.11.2011 FR 1160985
(43) Date de publication de la demande: 08.10.2014
(73) Titulaire: Xpert Automation, 77515 Pommeuse (FR)
(72) Inventeur: HERBELIN, Patrick, F-77515 Pommeuse (FR)
(74) Mandataire: Decorchemont, Audrey Véronique Christèle
(86) Numéro de dépôt international: PCT/EP2012/073512
(87) Numéro de publication internationale: WO 2013/079415

(56) Documents cités:
- EP-A1- 2 369 311

## Description

L'invention concerne un dispositif de distribution de poudre, un bouchon pour un tel dispositif et une station de travail comprenant un tel dispositif, comme décrit dans la revendication 1.

### ARRIERE PLAN TECHNOLOGIQUE DE L'INVENTION

Dans l'industrie chimique et pharmaceutique, il est souvent nécessaire de réaliser des dosages extrêmement précis de réactifs ou de produits se présentant sous forme de poudre. Il en est ainsi par exemple dans les laboratoires dans lesquels sont testées des molécules ou sont élaborées des compositions par mélange de produits. Ces produits sont extraits de bibliothèques d'échantillons dans lesquelles les échantillons sont conservés sous forme de petites quantités de poudre stockées dans de petits flacons ou réservoirs. La quantité de produit par échantillon étant limitée, il est nécessaire de n'utiliser que la plus petite quantité possible de produit afin de ne pas entraîner un appauvrissement rapide de la bibliothèque.

Certaines bibliothèques d'échantillons sont équipées d'un dispositif de distribution automatique de poudre.

Il existe des dispositifs de distribution automatiques qui comprennent un réservoir de stockage pourvu d'un bouchon doseur dont l'ouverture est réglable, comme dans le document EP 2 369 311. En fonction d'une consigne de quantité de poudre à distribuer et d'une indication de la quantité de poudre déjà distribuée, une unité de commande pilote le bouchon doseur pour augmenter ou diminuer son ouverture. L'indication de la quantité de poudre est fournie par une balance dite de précision, la résolution d'une telle balance étant par exemple de 1/10^{ème} de milligramme voire de 1/100^{ème} de milligramme.

Dans le document FR 2 846 632, l'indication de la quantité de poudre déjà distribuée est de la même façon fournie par des moyens de pesage, lesdits moyens de pesage étant agencés sous un flacon recevant la poudre.

Toutefois, il est difficile de délivrer de manière précise et répétitive des quantités de poudre de quelques dixièmes de milligramme avec de tels dispositifs. En effet, généralement, lorsqu'une balance indique une première valeur de masse de poudre distribuée, la quantité de poudre distribuée dépasse déjà la consigne initiale. La balance détecte en effet le début de l'écoulement de la poudre dans le flacon au moment ou celle-ci touche le fond du flacon introduisant un décalage trop important pour la distribution de très faibles quantités de poudre et ce même si la balance est d'une très grande précision.

### OBJET DE L'INVENTION

Un but de l'invention est de proposer un moyen assurant une détection plus précise du début de l'écoulement de la poudre que les dispositifs de l'art antérieur.

### BREVE DESCRIPTION DE L'INVENTION

En vue de la réalisation de ce but, on propose un dispositif de distribution de poudre, comprenant au moins un réservoir de stockage pourvu d'un bouchon comportant un orifice d'écoulement de la poudre.

Selon l'invention, le dispositif comporte :
- un obturateur pourvu d'une ouverture et monté mobile relativement au bouchon entre une position d'obturation interdisant un écoulement de la poudre et une position d'ouverture autorisant l'écoulement de la poudre par l'ouverture de l'obturateur, un perçage traversant l'obturateur de sorte à s'étendre de part et d'autre de l'ouverture de l'obturateur selon une direction sensiblement transversale à l'écoulement de la poudre ;
- des moyens de déplacement relatif du bouchon et de l'obturateur pour amener l'obturateur dans ses deux positions, ces moyens étant raccordés à une unité de commande qui est reliée à des moyens de détection sans contact de l'écoulement de la poudre, les moyens de détection comportant, à une première extrémité du perçage de l'obturateur, au moins un émetteur d'une onde dans le perçage et, à une deuxième extrémité du perçage, au moins un récepteur de détection de l'onde émise.

Ainsi, la détection de l'écoulement de la poudre est assurée en aval de l'orifice d'écoulement sensiblement au niveau dudit orifice ce qui assure une détection très précise de l'écoulement de la poudre vers, par exemple, un flacon à remplir et en particulier une détection très précise du début de l'écoulement.

L'inventeur a ainsi pu mettre au point un prototype détectant le début de l'écoulement de la poudre avec un intervalle de temps d'environ 50 microsecondes. Avec un dispositif de l'art antérieur comportant des moyens de pesage, si la balance est agencée à une distance de 45 millimètres du réservoir, la balance détecte le début de l'écoulement avec un décalage pouvant aller jusqu'à 100 millisecondes par rapport au dispositif de l'invention.

Le dispositif de l'invention permet ainsi de délivrer des quantités de poudre de quelques dixièmes de milligramme selon la finesse de la poudre et la masse volumique du produit.

De façon avantageuse, l'onde émise interagit directement avec la poudre lorsque celle-ci s'écoule à travers l'ouverture de l'obturateur. La détection du début de l'écoulement est encore plus précise.

Selon l'invention, on propose également un bouchon pour un tel dispositif et une station de travail comprenant un tel dispositif.

### BREVE DESCRIPTION DES DESSINS

L'invention sera mieux comprise à la lumière de la description qui suit de modes de réalisation non limitatifs de l'invention. Il sera fait référence aux figures ci-jointes, parmi lesquelles :
- la figure 1 est une vue schématique du dispositif de distribution de poudre selon un premier mode de réalisation de l'invention ;
- les figures 2a et 2b sont respectivement une vue de dessous et une vue de côté d'un obturateur du dispositif illustré à la figure 1 ;
- les figures 3a et 3b sont respectivement une vue de face et une vue de côté d'un bouchon du dispositif illustré à la figure 1 ;
- les figures 4a, 4b et 4c sont des vues schématiques illustrant différentes étapes de distribution de poudre à l'aide du dispositif illustré à la figure 1 ;
- les figures 5a, 5b et 5c sont des vues de dessous schématiques de l'obturateur et du bouchon au cours des différentes étapes de distribution illustrées respectivement aux figures 4a, 4b et 4c ;
- la figure 6 est une vue de dessous schématique de l'obturateur et du bouchon dans une variante de réalisation de l'invention ;
- la figure 7 est une vue analogue à la figure 1 d'un dispositif conforme à un deuxième mode de réalisation ;
- la figure 8 est une vue de dessus très schématique d'une station de travail comportant un dispositif de distribution de poudre selon le deuxième mode de réalisation.

### DESCRIPTION DETAILLEE DE L'INVENTION

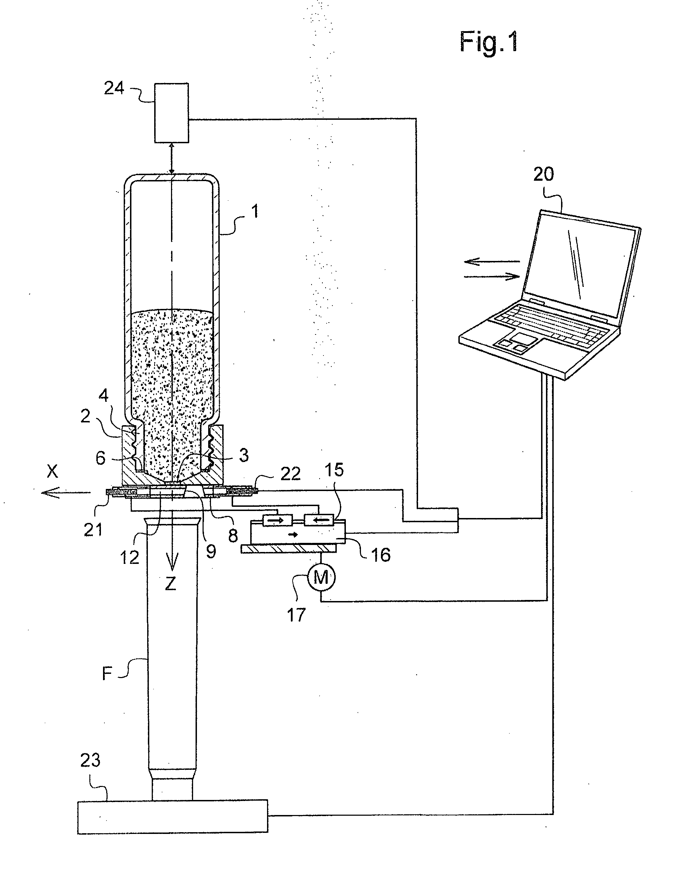

En référence à la figure 1, le dispositif de distribution de poudre selon le premier mode de réalisation de l'invention comporte un réservoir de stockage 1 de la poudre. Le réservoir de stockage 1 est pourvu d'un bouchon 2 comportant un orifice 3 d'écoulement de la poudre. Le réservoir 1 est par exemple une fiole en verre d'un contenant de 4 millilitres.

En service, le réservoir 1 est agencé de sorte qu'un écoulement de la poudre vers l'extérieur du réservoir s'effectue par gravité. Le réservoir est ici disposé verticalement, bouchon en bas, de sorte que la poudre s'écoule alors selon une direction d'écoulement de premier axe Z sensiblement vertical.

Selon un mode de réalisation particulier, le réservoir 1 comporte un goulot 4 dont une surface externe est filetée.

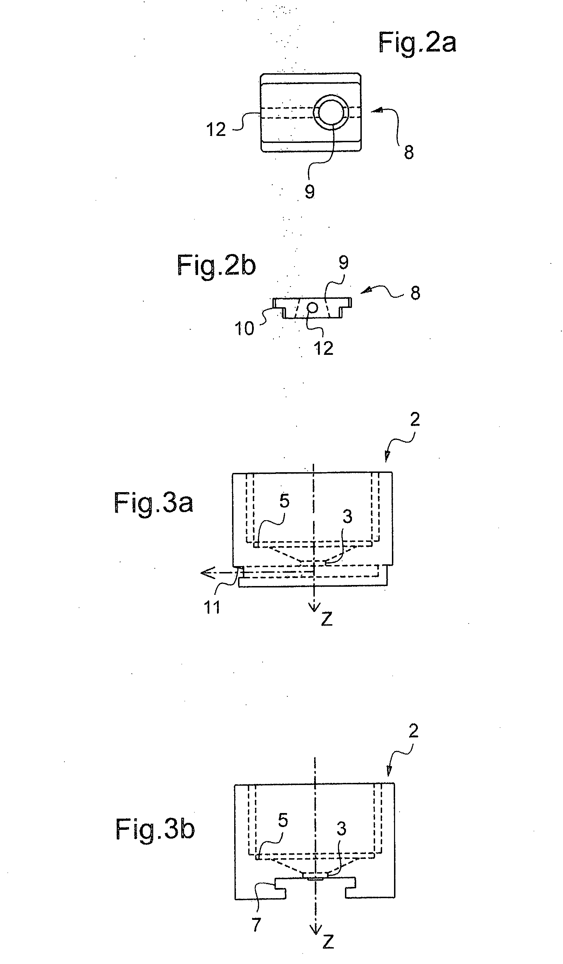

De préférence, en référence aux figures 3a et 3b, le bouchon 2 comporte une paroi tubulaire ayant des surfaces interne et externe cylindriques d'axe central parallèle au premier axe Z et une extrémité fermée par une cloison percée de l'orifice 3. La surface interne du bouchon 2 est taraudée pour permettre son engagement sur le goulot 4. La cloison a un pourtour externe formant un épaulement 5 apte à recevoir une rondelle d'étanchéité 6 destinée à être serrée entre le goulot 4 et ledit épaulement 5 (comme plus visible à la figure 1). La cloison comporte, du côté du réservoir 1, une portion de surface tronconique s'étendant depuis l'épaulement 5 jusqu'à l'orifice 3 pour faciliter l'écoulement de la poudre vers l'orifice d'écoulement 3 ici de contour circulaire.

Selon un mode de réalisation privilégié, une face de la cloison comportant l'orifice d'écoulement 3 comprend, à l'opposé du réservoir, une rainure 7 s'étendant sensiblement selon un deuxième axe X orthogonal au premier axe Z, la rainure 7 étant aménagée sur la face de la cloison de sorte que l'orifice d'écoulement 3 débouche dans ladite rainure 7. De préférence, la rainure 7 est aménagée sur ladite face de sorte que l'orifice d'écoulement 3 soit centré dans la rainure 7. Ici, la rainure 7 est aménagée sur la face de la cloison de sorte à s'étendre sensiblement au centre de ladite face.

Selon l'invention, en référence à la figure 1, le dispositif comporte un obturateur 8 monté sur le bouchon 2.

En référence aux figures 2a et 2b, l'obturateur 8 comporte une ouverture 9 traversant l'obturateur 8 selon sensiblement une direction parallèle au premier axe Z.

En outre, l'obturateur 8 a des bords opposés 10 engagés à coulissement dans la rainure 7 du bouchon 2. Selon un mode de réalisation particulier, la rainure 7 et les bords 10 forment une liaison de type queue d'aronde.

L'obturateur 8 est conformé de sorte à être monté mobile relativement au bouchon 2 entre une position d'obturation interdisant un écoulement de la poudre, l'ouverture 9 de l'obturateur n'étant pas aligné avec l'orifice d'écoulement 3 du bouchon 2, et une position d'ouverture autorisant l'écoulement de la poudre par l'ouverture 9 de l'obturateur 8, l'ouverture 9 de l'obturateur étant alors au moins en partie alignée avec l'orifice d'écoulement 3 du bouchon 2. Selon un mode réalisation privilégié, l'ouverture 9 et l'orifice d'écoulement 3 sont conformés de sorte qu'en position d'ouverture, l'ouverture 9 et l'orifice 3 sont concourants. En position d'ouverture, la poudre s'écoule alors avec un débit maximal.

Selon un mode de réalisation privilégié, comme plus visible aux figures 2a et 2b, la rainure 7 du bouchon est borgne à l'une de ses extrémités de sorte qu'en position d'obturation, les bords 10 viennent en butée contre ladite extrémité de la rainure 7. De préférence, le bouchon 2 comporte un plot 11 aménagé dans l'autre des extrémités de la rainure 7 de sorte qu'en position d'ouverture, l'un des bords 10 vienne en butée contre ledit plot 11.

De préférence, l'ouverture 9 est conformée sensiblement en un cône s'évasant d'une première face de l'obturateur 8 qui est en regard du bouchon 2, à une deuxième face de l'obturateur opposée à la première face 8. Ainsi, la poudre s'écoule plus facilement. Cela permet de minimiser un risque d'agglomérat des grains de poudre lors du passage dans l'ouverture 9.

De préférence, au niveau de la première face de l'obturateur 8, l'ouverture 9 a une section circulaire identique à l'orifice d'écoulement 3 du bouchon 2.

L'obturateur 8 comporte en outre un perçage 12 débouchant qui s'étend de part et d'autre de l'ouverture de l'obturateur 8 selon une direction sensiblement transversale au premier axe Z. La direction selon laquelle s'étend le perçage 12 est ainsi sécante avec le premier axe Z lorsque l'obturateur 8 est dans la position d'ouverture.

De façon privilégiée, le perçage 12 s'étend sensiblement selon une direction de déplacement de l'obturateur entre la position d'ouverture et la position d'obturation, soit ici une direction sensiblement parallèle au deuxième axe X. Ainsi, la direction selon laquelle s'étend le perçage 12 est sécante avec le premier axe Z sensiblement au moment où l'ouverture 9 de l'obturateur 8 est tangente à l'orifice d'écoulement 3.

Le dispositif comporte en outre des moyens de déplacement relatif du bouchon et de l'obturateur pour amener l'obturateur 8 dans la position d'obturation ou dans la position d'ouverture. En référence à la figure 1, les moyens de déplacement déplacent ici l'obturateur 8 entre la position d'obturation et la position d'ouverture.

Selon un mode de réalisation particulier, les moyens de déplacement comportent une pince à mors parallèles 15. Chaque mors est destiné à venir coopérer avec une face latérale opposée de l'obturateur 8 de sorte à serrer l'obturateur 8 entre les deux mors.

Les moyens de déplacement comportent également ici un plateau mobile 16 sur lequel la pince 15 est agencée de sorte qu'un déplacement du plateau mobile 16 entraîne un déplacement correspondant de la pince 15 et par là un déplacement de l'obturateur 8 de la position d'obturation à la position d'ouverture (et inversement) lorsque l'obturateur 8 est serré entre les deux mors. Un moteur 17 permet par exemple de déplacer le plateau 16.

Les moyens de déplacement sont raccordés à une unité de commande 20 qui contrôle ici un actionnement de la pince 15 et un déplacement du plateau mobile 16.

L'unité de commande 20 est en outre reliée à des moyens de détection sans contact de l'écoulement de la poudre. Les moyens de détection sans contact comportent ici des moyens lumineux de détection qui comprennent, à une première extrémité du perçage 12 de l'obturateur 8, au moins un émetteur 21 d'un faisceau lumineux dans le perçage 12 et, à une deuxième extrémité du perçage 12, au moins un récepteur 22 de détection du faisceau lumineux. De cette façon, le faisceau lumineux traverse l'obturateur 8 par le perçage 12 et croise nécessairement le premier axe Z lorsque l'obturateur 8 est en position d'ouverture.

L'émetteur 21 et le récepteur 22 sont portés par les moyens de déplacement. Ici, un des mors porte l'émetteur 21 et l'autre des mors porte le récepteur 22, la pince 15 étant évidement agencée de sorte que lorsque les mors enserrent l'obturateur 8, l'émetteur 21 et le récepteur 22 s'étendent aux extrémités opposées du perçage 12.

Le dispositif comporte en outre une balance de précision 23 qui est disposée sous le réservoir de stockage 1 et qui également reliée à l'unité de commande 20 pour aider à la détermination d'une quantité de poudre distribuée.

Le dispositif comprend des moyens de tapotage et/ou de vibration 24 pour aider l'écoulement de la poudre qui sont reliés à l'unité de commande 20. De tels moyens 24 sont particulièrement adaptés pour la distribution de poudre collante ou ayant tendance à s'agglomérer. Des moyens de tapotage et/ou de vibration 24 étant bien connus de l'art antérieur, ils ne seront pas décrits plus en détails ici.

Un cycle de distribution d'une dose de poudre va être à présent décrit selon un mode de mise en oeuvre particulier non limitatif du premier mode de réalisation de l'invention.

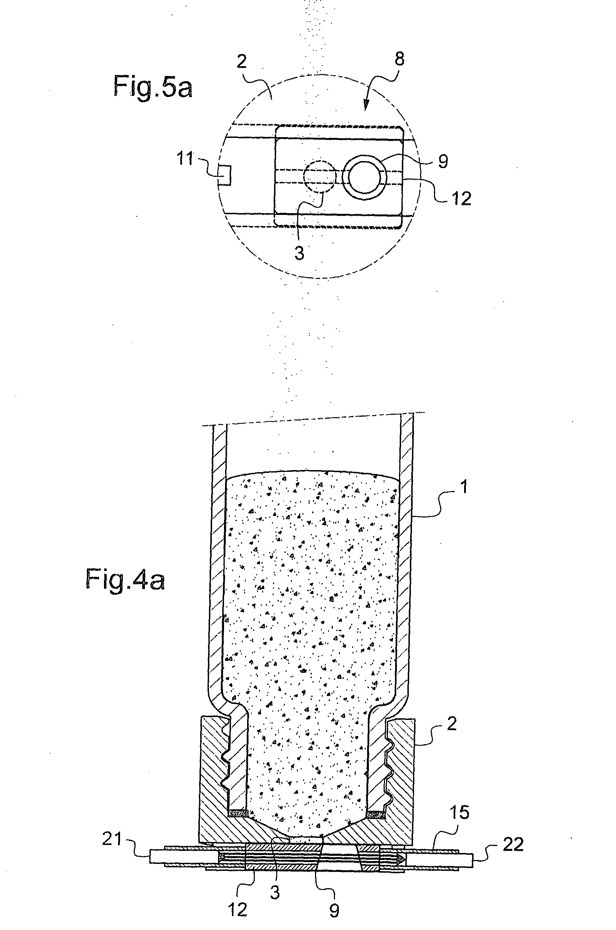

Dans une situation initiale, un flacon F est disposé sur la balance 23 en dessous du réservoir de stockage 1. En référence aux figures 4a et 5a, l'obturateur 8 est alors en position d'obturation de sorte que le faisceau lumineux émis par l'émetteur 21 est reçu dans son intégralité par le récepteur 22.

Puis, une consigne d'une quantité de poudre à distribuer est fournie à l'unité de commande 20.

L'unité de commande 20 génère alors une consigne de déplacement de l'obturateur 8 à destination des moyens de déplacement. Les mors viennent enserrer l'obturateur 8 puis le plateau mobile 16 se déplace pour entraîner une translation de l'obturateur 8 de la position d'obturation vers la position d'ouverture selon un premier incrément prédéterminé.

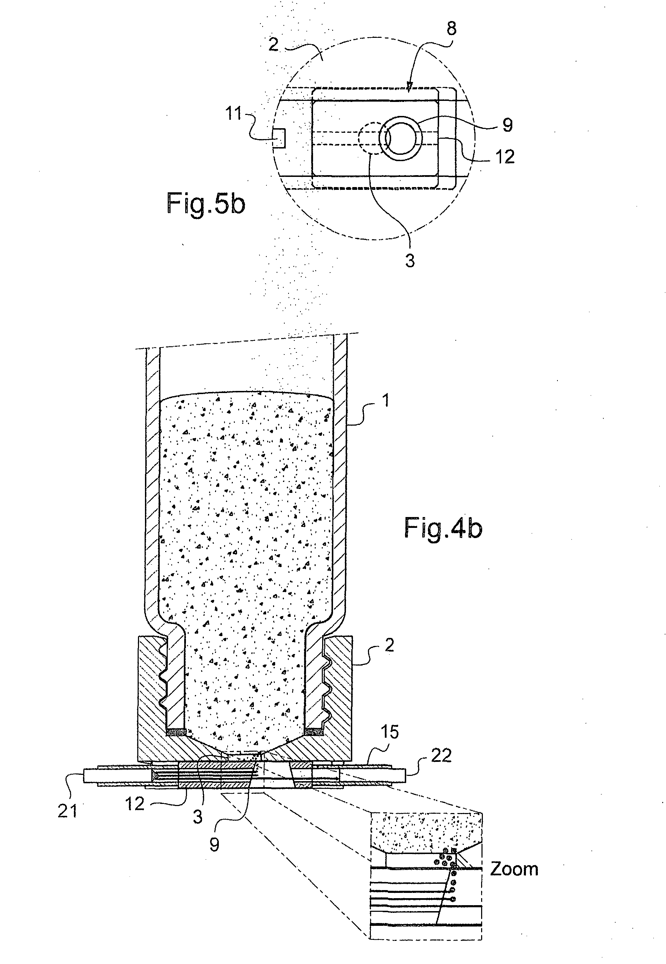

En référence à la figure 4b et 5b, l'obturateur 8 est déplacé de sorte que l'ouverture 9 soit tangente puis alignée en partie avec l'orifice 3. Les premiers grains de poudre commencent à s'écouler vers le flacon F à travers l'orifice 3 et l'ouverture 9. Le faisceau lumineux reçu par le récepteur 22 est alors atténué par lesdits grains. On notera qu'il importe que la géométrie de l'ouverture 9 et de l'orifice 3 soit telle que les premiers grains tombent dans le faisceau.

A l'aide du signal que l'unité de commande 20 reçoit des moyens lumineux de détection, l'unité de commande 20 détermine ainsi le début de la distribution de la poudre.

De façon avantageuse, grâce à l'agencement du perçage 12, avec une coïncidence relativement faible entre l'ouverture 9 et l'orifice 3, le faisceau lumineux traverse obligatoirement le premier axe Z ce qui assure une détection très précise du début de l'écoulement.

Si un début d'écoulement de la poudre n'est pas détecté après l'ouverture de l'obturateur selon le premier incrément, l'unité de commande 20 génère un ordre d'actionnement à destination des moyens de tapotage et/ou de vibration 24. Si un début d'écoulement de la poudre n'est toujours pas détecté après tapotage, l'unité de commande 20 génère une consigne de déplacement selon un deuxième incrément.

Cette procédure de commande est réalisée de manière itérative jusqu'à la détection du début de l'écoulement. Le nombre d'incréments correspondant à la position de l'obturateur 8 relativement au bouchon 2 lors de la détection du début de l'écoulement est alors mémorisé et l'obturateur 8 est ramené en position d'obturation. La quantité de poudre délivrée est alors pesée par la balance 23 qui génère un signal de pesée à destination de l'unité de commande 20.

A partir des informations fournies par la balance 23 et des moyens de détection, l'unité de commande 20 détermine les conditions (position de l'obturateur 8 relativement au bouchon et/ou tapotage) permettant la distribution de poudre souhaitée.

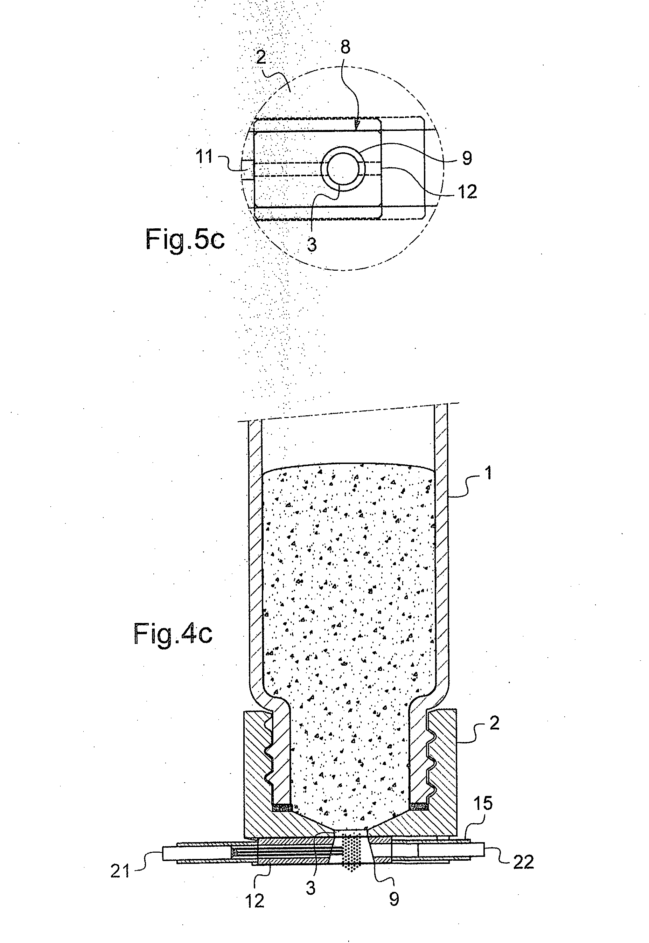

En référence aux figures 4c et 5c, l'obturateur 8 est par exemple alors déplacé jusqu'à arriver en position d'ouverture. Le débit d'écoulement de la poudre est alors maximal. Une plus grande quantité de grains interagit avec le faisceau lumineux qui est peut ainsi être complètement coupé, au moins par intermittence.

A partir du signal reçu de la balance 23, l'unité de commande 20 en déduit une quantité de poudre déjà distribuée qu'il compare avec la consigne d'une quantité de poudre à distribuer.

Lors d'une dernière étape, l'unité de commande 20 génère une consigne de déplacement de l'obturateur à destination des moyens de déplacement. Le plateau mobile 16 est déplacé de sorte à entraîner une translation de l'obturateur 8 pour amener l'obturateur 8 en position d'obturation.

Selon un mode de réalisation privilégié, une fois l'obturateur 8 en position d'obturation, l'unité de commande 20 compare le signal fourni par la balance 23 à la consigne d'une quantité de poudre à distribuer pour vérifier si ladite consigne a été respectée.

Ainsi, le dispositif de l'invention permet de contrôler très précisément l'écoulement de la poudre.

De façon avantageuse, le dispositif de l'invention est adaptable à n'importe quel type de réservoir et en particulier aux réservoirs déjà utilisés dans les chimiothèques. En effet, il suffit d'adapter la partie taraudée du bouchon au réservoir souhaité.

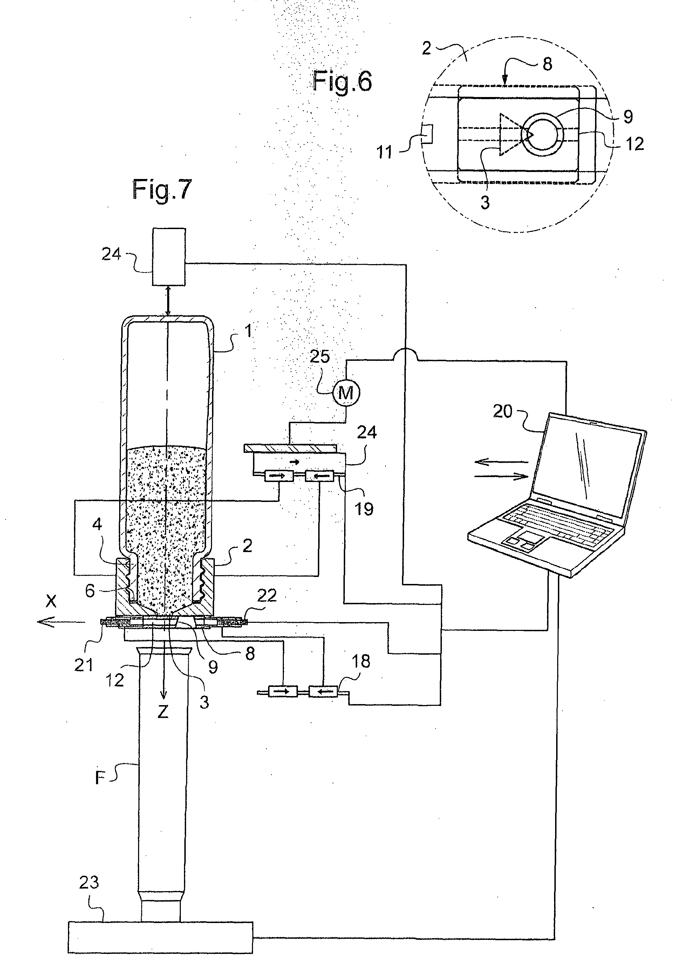

En référence à la figure 7, un second mode de réalisation va être à présent décrit. Les éléments communs avec le premier mode de réalisation illustré à la figure 1 conservent la même numérotation.

Dans le premier mode de réalisation, les moyens de déplacement relatif du bouchon et de l'obturateur déplaçaient l'obturateur 8 entre la position d'obturation et la position d'ouverture.

Dans le second mode de réalisation, les moyens de déplacement relatif du bouchon et de l'obturateur déplacent ici le bouchon 2, et donc le réservoir 1, de sorte à amener l'obturateur 8 entre la position d'obturation et la position d'ouverture.

De préférence, les moyens de déplacement relatif du bouchon et de l'obturateur comportent une première pince à mors parallèles 18, chaque mors étant destiné à venir coopérer avec une face latérale opposée de l'obturateur 8 de sorte à serrer l'obturateur 8 entre les deux mors. La première pince 18 maintient ainsi l'obturateur 8 au dessus du flacon F dans une position donnée fixe par rapport au flacon F de sorte que l'ouverture 9 de l'obturateur 8 soit centrée sur une extrémité ouverture du flacon F. Comme pour le premier mode de réalisation, la première pince 18 porte l'émetteur 21 et le récepteur 22. Un des mors de la première pince 18 porte l'émetteur 21 et l'autre des mors porte le récepteur 22, la première pince 18 étant évidement agencée de sorte que lorsque les mors enserrent l'obturateur 8, l'émetteur 21 et le récepteur 22 s'étendent aux extrémités opposées du perçage 12.

Les moyens de déplacement relatif du bouchon et de l'obturateur comportent en outre une deuxième pince à mors parallèles 19, chaque mors étant destiné à venir coopérer avec des surfaces diamétralement opposées du bouchon 2 de sorte à serrer le bouchon 2 entre les deux mors.

Les moyens de déplacement comportent également ici un plateau mobile 24 sur lequel la deuxième pince 19 est agencée de sorte qu'un déplacement du plateau mobile 24 entraîne un déplacement correspondant de la deuxième pince 19 et par là un déplacement du bouchon 2, et donc du réservoir 1, pour amener l'obturateur 8 de la position d'obturation à la position d'ouverture (et inversement) lorsque le bouchon 2 est serré entre les deux mors. Un moteur 25 permet par exemple de déplacer le plateau mobile 24.

Les moyens de déplacement sont raccordés à l'unité de commande 20 qui contrôle ici un actionnement de la deuxième pince 19 et un déplacement du plateau mobile 24.

De façon avantageuse, de par le deuxième mode de réalisation, l'ouverture 9 de l'obturateur 8 reste fixe vis-à-vis du flacon F et de préférence est centrée sur l'extrémité ouverte dudit flacon F. On évite ainsi que des grains de poudre se déposent sur le rebord de l'extrémité ouverte du flacon F et que ces mêmes grains tombent hors du flacon F lors de la fermeture dudit flacon F, faussant ainsi la quantité de poudre délivrée.

Ainsi, le dispositif de l'invention permet de contrôler très précisément l'écoulement de la poudre.

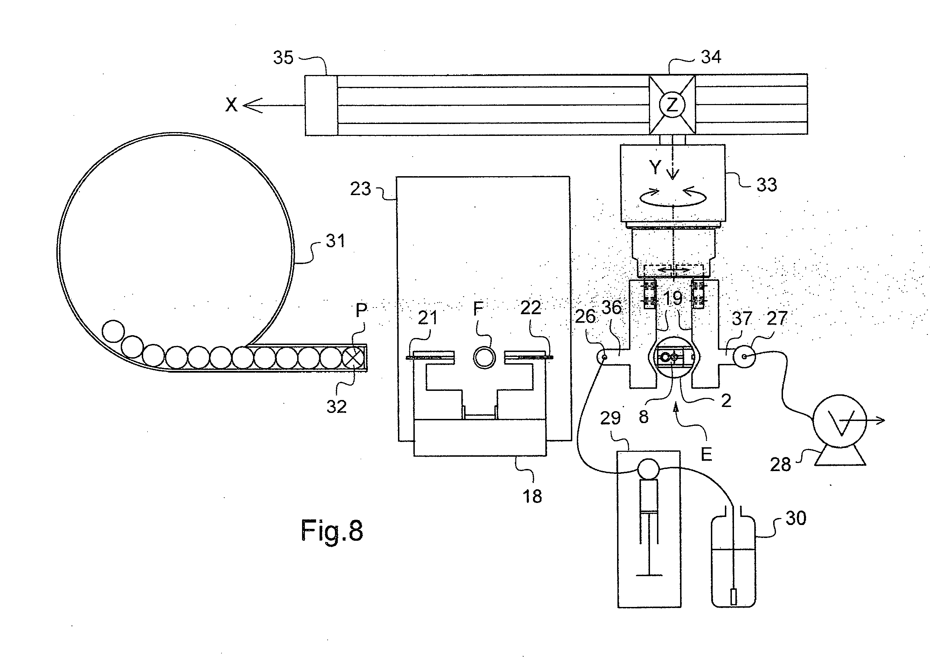

En référence à la figure 8, il est décrit une station de travail comportant un dispositif de distribution de poudre selon le deuxième mode de réalisation. Les éléments communs avec le deuxième mode de réalisation illustré à la figure 7 conservent la même numérotation.

La première pince 18 est agencée dans la station de travail pour s'étendre au dessus de la balance 23 de façon permanente. Mis à part le mouvement relatif d'un des mors de la première pince 18 relativement à l'autre des mors de la première pince 18, ladite première pince 18 a une position fixe dans la station de travail relativement à la balance 23.

Les moyens de déplacement relatif du bouchon et de l'obturateur sont ici agencés dans la station de travail pour déplacer également dans la station de travail un ensemble E formé par le réservoir 1, le bouchon 2 et l'obturateur 8.

A cet effet, les moyens de déplacement comportent une unité de rotation 33 à laquelle est liée la deuxième pince 19 pour permettre la rotation de l'ensemble E autour d'un troisième axe Y orthogonal au premier axe Z et au deuxième axe X. Les moyens de déplacement comportent également une unité d'élévation 34 à laquelle est liée l'unité de rotation 33 pour permettre la translation de l'unité de rotation 33, et par là de l'ensemble E, selon le premier axe Z. Les moyens de déplacement comportent également une unité de translation 35 à laquelle est liée l'unité d'élévation 34 pour permettre la translation de l'unité d'élévation 34, et par là de l'ensemble E, selon le deuxième axe X.

Les moyens de déplacement sont raccordés à l'unité de commande qui contrôle ici notamment un actionnement de la première pince 18, de la deuxième pince 19, de l'unité de rotation 33, de l'unité d'élévation 34 et de l'unité de translation 35.

De façon privilégiée, la station de travail comprend en outre un dispositif de distribution d'un solvant au flacon F pour distribuer au flacon F un volume de solvant une fois la quantité de poudre souhaitée versée dans le flacon F. De préférence, ce volume est déterminé à partir d'une consigne de concentration que l'unité de commande 20 a reçue.

A cet effet, le dispositif de distribution d'un solvant comporte un récipient 30 comprenant le solvant à distribuer et des moyens de distribution du solvant qui sont reliés au récipient 30. Les moyens de distribution du solvant comportent par exemple une seringue numérique 29. Les moyens de distribution sont raccordés à l'unité de commande qui contrôle ici un actionnement de la seringue numérique 29 en fonction d'une consigne de concentration que l'unité de commande 20 a reçue et de l'information de la quantité de poudre qui a été délivrée au flacon F, information fournie par la balance 23.

Selon un mode de réalisation privilégié, l'un des mors de la deuxième pince 19 comporte un premier bras 36 s'étendant de préférence suivant une direction parallèle au deuxième axe X. Le premier bras 36 comporte ici une canule 26, un tuyau de distribution reliant la seringue numérique 29 à la canule 26.

De façon privilégiée, la station de travail comprend en outre un dispositif de distribution de capuchons pour fermer le flacon F par l'un de ces capuchons une fois la quantité de poudre souhaitée versée dans le flacon F ou une fois la quantité de poudre souhaitée et la quantité de solvant souhaitée versées dans le flacon F.

A cet effet, le dispositif de distribution de capuchons comporte des moyens d'amenée de capuchons qui comprennent par exemple un bol vibrant 31 dans lequel sont placés les capuchons. De façon connue en soi, le bol vibrant 31 permet d'amener un seul capuchon dans une position donnée P fixe relativement à la station de travail.

Selon un mode de réalisation privilégié, l'autre des mors de la deuxième pince 19 comporte un deuxième bras 37 s'étendant de préférence suivant la direction selon laquelle s'étend le premier bras 36. Le deuxième bras 37 comporte ici des moyens de préhension du capuchon positionné en position P dans le bol vibrant 31, les moyens de préhension étant au moins en partie agencés sur le deuxième bras 37.

Par exemple, si les capuchons sont en élastomère, les moyens de préhension comportent une ventouse rigide 27 aménagée sur le deuxième bras 37, la ventouse 27 étant reliée à un organe de génération de vide comme une pompe à vide 28. Les moyens de préhension sont raccordés à l'unité de commande qui contrôle ici un actionnement de la pompe à vide 28.

Un cycle de travail va être à présent décrit selon un mode de mise en oeuvre particulier non limitatif.

En situation initiale, le flacon F est disposé sur la balance 23. Les mors de la première pince 18 sont ouverts et encadrent le flacon F.

L'ensemble E est dans une position zéro où la deuxième pince 19 enserre le bouchon 2 du réservoir de stockage 1 entre ses mors, le réservoir 1 n'étant pas en une position apte à délivrer la poudre par gravité. L'obturateur 8 est monté sur le bouchon 2 dans la position d'obturation.

Lors d'une première étape, l'unité d'élévation 34 déplace l'ensemble E jusqu'à une première position où l'ensemble E est à une hauteur suffisante pour autoriser un renversement de l'ensemble E comme décrit au paragraphe suivant.

Lors d'une deuxième étape, l'unité de rotation 33 déplace l'ensemble E jusqu'à une deuxième position dans laquelle le réservoir 1 est retourné de sorte à pouvoir délivrer la poudre par gravité, le réservoir s'étendant ici selon l'axe Z. L'obturateur 8 est alors sensiblement à une même hauteur que l'extrémité ouverte du flacon F. Un ajustement de la hauteur de l'ensemble E par l'unité d'élévation 34 pouvant être nécessaire pour que l'obturateur 8 soit sensiblement à la hauteur de l'extrémité ouverte du flacon F.

Lors d'une troisième étape, l'unité de translation 35 déplace l'ensemble E jusqu'à une troisième position où l'ouverture 9 de l'obturateur 8 est sensiblement centrée sur l'extrémité ouverte du flacon F.

Lors d'une quatrième étape, la première pince 18 vient enserrer l'obturateur 8 entre ses mors de sorte que l'émetteur 21 et le récepteur 22 s'étendent à des extrémités opposées du perçage 12.

Lors d'une cinquième étape, en fonction des consignes de l'unité de commande, l'unité de translation déplace la deuxième pince 19 et le bouchon 2 suivant le deuxième axe X afin de délivrer la quantité de poudre souhaitée au flacon F. L'obturateur 8 étant serré entre les mors de la première pince 18, les déplacements de la deuxième pince 19 et du bouchon 2 ne l'affectent pas.

Lors d'une sixième étape, une fois la quantité de poudre souhaitée délivrée au flacon F, la première pince 18 libère l'obturateur 8 qui est alors en position d'obturation.

Lors d'une septième étape, l'unité d'élévation 34 déplace l'ensemble E jusqu'à une quatrième position où la ventouse 27 est à une hauteur supérieure à celle d'un capuchon 32 en position P du bol vibrant.

Lors d'une huitième étape, l'unité de translation 25 déplace l'ensemble E jusqu'à une cinquième position où la ventouse 27 est sensiblement centrée sur le capuchon 32. La deuxième pince 19 est conformée de sorte que la canule 26 soit alors centrée sur l'extrémité ouverte du flacon F.

Lors d'une neuvième étape, l'unité d'élévation 34 déplace l'ensemble E jusqu'à une sixième position où la ventouse 27 repose sensiblement sur le capuchon 32.

Lors d'une dixième étape, l'unité de commande génère simultanément une consigne d'actionnement à destination de la pompe à vide 28 et une consigne de distribution à destination de la seringue numérique 29 d'une quantité de solvant à distribuer. La ventouse 27 saisit ainsi le capuchon 32 et la seringue numérique 29 distribue une quantité de solvant au flacon F. De préférence, une fois que la seringue numérique 29 a délivré la dose de solvant souhaitée, l'unité de commande compare le signal fourni par la balance 23 à la consigne de quantité de solvant à distribuer pour vérifier si ladite consigne a été respectée. Il est ainsi possible de contrôler plus finement la quantité de solvant délivrée qu'en ne considérant que les indications de la seringue numérique 29.

Lors d'une onzième étape, l'unité d'élévation 34 déplace l'ensemble E jusqu'à la cinquième position.

Lors d'une douzième étape, l'unité de translation 35 déplace l'ensemble E jusqu'à une septième position où la ventouse 27 est sensiblement centrée sur l'extrémité ouverte du flacon F de sorte que le capuchon 32 soit également centré sur ladite extrémité.

Lors d'une treizième étape, l'unité d'élévation 34 déplace l'ensemble E jusqu'à une huitième position où le capuchon 32 est agencé sur l'extrémité libre du flacon F de sorte à s'emboîter sur ladite extrémité libre.

Lors d'une quatorzième étape, l'unité de commande génère une consigne d'arrêt à destination de la pompe à vide 28. La ventouse 27 lâche alors le capuchon 32.

Lors d'une quinzième étape, l'ensemble E est ramené en position zéro par l'unité d'élévation 34, l'unité de translation 35 et l'unité de rotation 33.

Bien entendu l'invention n'est pas limitée aux modes de réalisation décrits et on peut y apporter des variantes de réalisation sans sortir du cadre de l'invention tel que défini par les revendications.

En particulier, bien que l'on ait indiqué que le dispositif de distribution de poudre selon l'invention était adapté à la distribution de quantités de poudre de l'ordre de quelques dixièmes de milligramme, le dispositif est également parfaitement adapté à la distribution de plus grandes quantités de poudre.

Bien qu'il ait été décrit que le réservoir de stockage 1 était une fiole en verre d'un contenant de 4 millilitres, le réservoir de stockage 1 pourra être différent. Par exemple, le réservoir de stockage 1 pourra être une fiole de 8 millilitres ou encore une fiole de 13 millilitres.

Le bouchon 2 pourra coopérer différemment avec le réservoir de stockage 1. Le bouchon 2 pourra par exemple être simplement enfoncé dans le goulot 4 du réservoir de stockage 1.

Bien qu'ici le mouvement relatif de l'obturateur 8 et du bouchon soit un mouvement de translation, le dispositif pourra être agencé de sorte que l'obturateur 8 (ou le bouchon 2) se déplace selon un autre mouvement, par exemple selon un mouvement de rotation.

La rainure 7 pourra être une rainure en T et non une rainure destinée à une liaison de type queue d'aronde. La rainure 7 pourra ne pas comporter de bornes d'arrêt des bords 10 de l'obturateur 8 à chacune de ses extrémités. Par exemple, le plateau mobile 16 sera alors commandé de sorte à limiter un déplacement de l'obturateur 8 relativement au bouchon 2.

Bien qu'ici l'orifice d'écoulement 3 soit circulaire et que l'ouverture 9 ait une section circulaire, l'orifice 3 et l'ouverture 9 pourront être conformés différemment. En référence à la figure 6, l'orifice 3 est ainsi de forme triangulaire et l'ouverture 9 a une section circulaire. L'orifice 3 est ménagé sur le bouchon 2 de sorte que ce soit un des sommets du triangle qui coïncide en premier avec l'ouverture 9 de l'obturateur 8 ce qui permet de contrôler très finement le début de l'écoulement de la poudre.

Par moyens de déplacement relatif du bouchon et de l'obturateur, on entend des moyens agissant soit sur l'obturateur, soit sur le bouchon.

En variante, les moyens de détection sans contact peuvent être des moyens optiques mettant en oeuvre un faisceau lumineux et de préférence un faisceau infrarouge ou des moyens ultrasonores.

Bien qu'ici la station de travail comprenne un dispositif de distribution de poudre selon le deuxième mode de réalisation, la station de travail pourra comporter un dispositif de distribution de poudre selon le premier mode de réalisation. Les moyens de déplacement relatif du bouchon et de l'obturateur comporteront alors des moyens pour déplacer le bouchon relativement au flacon et des moyens pour déplacer l'obturateur relativement au bouchon.

Les éléments des dispositifs de distribution de solvant et de distribution de capuchons pourront être différents de ceux décrits. Par exemple, le premier bras pourra comporter une double canule, une des canules étant reliée au tuyau de distribution et l'autre des canules étant reliée à des moyens de distribution de gaz inerte comme de l'argon. Ainsi, une fois la quantité de solvant souhaitée délivrée au flacon, l'unité de commande enverra un signal aux moyens de distribution de gaz inerte pour que du gaz inerte soit injecté dans le flacon afin de chasser l'air restant dans le flacon.

La station de travail pourra comporter un nombre différent de dispositifs ou des dispositifs différents de ceux décrits outre le dispositif de distribution de poudre. Par exemple, la station de travail pourra ne comporter qu'un dispositif de distribution de poudre ou qu'un dispositif de distribution de poudre et un dispositif de distribution d'un solvant ou qu'un dispositif de distribution de poudre et un dispositif de distribution de capuchons. La station de travail pourra ne comporter qu'un dispositif de distribution de poudre et un dispositif comportant des moyens de distribution de gaz inerte comme de l'argon pour chasser l'air restant dans le flacon.

## Revendications

1. Dispositif de distribution de poudre, comprenant au moins un réservoir de stockage (1) pourvu d'un bouchon (2) comportant un orifice d'écoulement (3) de la poudre, le dispositif étant **caractérisé en ce qu'**il comporte :
- un obturateur (8) pourvu d'une ouverture (9) et monté mobile relativement au bouchon entre une position d'obturation interdisant un écoulement de la poudre et une position d'ouverture autorisant l'écoulement de la poudre par l'ouverture de l'obturateur, un perçage (12) traversant l'obturateur de sorte à s'étendre de part et d'autre de l'ouverture de l'obturateur selon une direction sensiblement transversale à l'écoulement de la poudre;
- des moyens de déplacement relatif du bouchon et de l'obturateur pour amener l'obturateur dans ses deux positions, ces moyens étant raccordés à une unité de commande (20) qui est reliée à des moyens de détection sans contact de l'écoulement de la poudre, les moyens de détection comportant, à une première extrémité du perçage de l'obturateur, au moins un émetteur (21) d'une onde dans le perçage et, à une deuxième extrémité du perçage, au moins un récepteur (22) de détection de l'onde émise.

2. Dispositif selon la revendication 1, dans lequel l'orifice d'écoulement (3) est circulaire et, selon un plan de section normal à la direction d'écoulement de la poudre, l'ouverture (9) de l'obturateur (8) a une section circulaire.

3. Dispositif selon la revendication 2, dans lequel l'ouverture (9) a une section circulaire sensiblement identique à l'orifice d'écoulement (3) au niveau d'une face de l'obturateur (8) qui est en regard du bouchon (2).

4. Dispositif selon la revendication 1, dans lequel l'obturateur (8) est monté mobile sur le bouchon (2) entre la position d'ouverture et la position d'obturation et déplacé en service par les moyens de déplacement entre lesdites positions.

5. Dispositif selon la revendication 4, dans lequel l'obturateur (8) est monté mobile en translation sur le bouchon (2) selon une direction de déplacement transversale à la direction d'écoulement de la poudre.

6. Dispositif selon la revendication 4, dans lequel les moyens de déplacement comportent une pince à mors parallèles (15), chaque mors étant destiné à venir coopérer avec une face latérale opposée de l'obturateur (8) de sorte à serrer l'obturateur entre les deux mors.

7. Dispositif selon la revendication 1, dans lequel l'émetteur (21) et le récepteur (22) sont portés par les moyens de déplacement.

8. Dispositif selon les revendications 6 et 7, dans lequel un des mors porte l'émetteur (21) et l'autre des mors porte le récepteur (22), la pince (15) étant agencée de sorte que lorsque les mors enserrent l'obturateur (8), l'émetteur (21) et le récepteur (22) s'étendent aux extrémités opposées du perçage (12).

9. Dispositif selon la revendication 1, dans lequel le bouchon (2) est monté mobile sur l'obturateur (8) et déplacé en service par les moyens de déplacement pour amener l'obturateur dans la position d'ouverture et la position d'obturation.

10. Dispositif selon la revendication 1, dans lequel une face du bouchon (2) comportant l'orifice d'écoulement (3) comprend une rainure (7), l'obturateur (8) ayant des bords opposés (10) engagés à coulissement dans ladite rainure.

11. Dispositif selon la revendication 1, dans lequel le perçage (12) s'étend de part et d'autre de l'ouverture (9) de l'obturateur (8) sensiblement selon une direction de déplacement de l'obturateur relativement au bouchon (2).

12. Bouchon (2) pour dispositif selon l'une quelconque des revendications précédentes, dans lequel une surface interne du bouchon est taraudée pour coopérer avec une surface externe filetée d'un goulot (4) du réservoir (1).

13. Station de travail comprenant un dispositif de distribution de poudre selon l'un quelconque des revendications précédentes.

14. Station de travail selon la revendication 13, comprenant en outre un dispositif de distribution d'un solvant pour distribuer une quantité de solvant, un dispositif de distribution de capuchons pour fermer un flacon ayant reçu de la poudre et du solvant, les moyens de déplacement relatif du bouchon et de l'obturateur étant agencés dans la station de travail pour déplacer dans la station de travail au moins un ensemble formé par le réservoir, le bouchon et l'obturateur d'un dispositif à un autre.

## Patentansprüche

1. Vorrichtung zur Abgabe eines Pulvers, umfassend mindestens einen Lagerbehälter (1), der mit einer Verschlusskappe (2) versehen ist, die eine Ausflussöffnung (3) für das Pulver umfasst, wobei die Vorrichtung **dadurch gekennzeichnet ist, dass** sie umfasst:
- eine Verschlussvorrichtung (8), die mit einer Öffnung (9) versehen und relativ zur Verschlusskappe beweglich zwischen einer Schließstellung, die ein Ausfließen des Pulvers verhindert, und einer Öffnungsstellung gelagert ist, die das Ausfließen des Pulvers durch die Öffnung der Verschlussvorrichtung gestattet, wobei eine Bohrung (12) die Verschlussvorrichtung derart durchsetzt, dass sie sich zu beiden Seiten der Öffnung der Verschlussvorrichtung in einer im Wesentlichen transversalen Richtung zum Ausfluss des Pulvers erstreckt,
- Mittel zum relativen Verschieben der Verschlusskappe und der Verschlussvorrichtung, um die Verschlussvorrichtung in ihre beiden Stellungen zu bringen, wobei diese Mittel mit einer Steuereinheit (20) verbunden sind, die mit Mitteln zum kontaktlosen Erfassen des Ausfließens des Pulvers verbunden ist, wobei die Erfassungsmittel an einem ersten Ende der Bohrung der Verschlussvorrichtung mindestens einen Sender (21) zum Aussenden einer Welle in die Bohrung und an einem zweiten Ende der Bohrung mindestens einen Empfänger (22) zum Erfassen der ausgesandten Welle umfassen.

2. Vorrichtung nach Anspruch 1, wobei die Ausflussöffnung (3) kreisförmig ist und die Öffnung (9) der Verschlussvorrichtung (8) in einer zur Fließrichtung des Pulvers senkrechten Schnittebene einen kreisförmigen Querschnitt hat.

3. Vorrichtung nach Anspruch 2, wobei die Öffnung (9) einen kreisförmigen Querschnitt hat, der im Wesentlichen identisch zur Ausflussöffnung (3) im Bereich einer Seite der Verschlussvorrichtung (8) ist, die sich gegenüber der Verschlusskappe (2) befindet.

4. Vorrichtung nach Anspruch 1, wobei die Verschlussvorrichtung (8) an der Verschlusskappe (2) beweglich zwischen der Öffnungsstellung und der Schließstellung gelagert ist und im Betrieb von den Verschiebungsmitteln zwischen den genannten Stellungen verschoben wird.

5. Vorrichtung nach Anspruch 4, wobei die Verschlussvorrichtung (8) an der Verschlusskappe (2) in einer zur Fließrichtung des Pulvers transversalen Verschiebungsrichtung in Translation beweglich gelagert ist.

6. Vorrichtung nach Anspruch 4, wobei die Verschiebungsmittel eine Zange (15) mit parallelen Backen umfassen, wobei jede Backe dazu bestimmt ist, mit einer gegenüberliegenden Seitenfläche der Verschlussvorrichtung (9) derart zusammenzuwirken, dass die Verschlussvorrichtung zwischen den beiden Backen eingespannt ist.

7. Vorrichtung nach Anspruch 1, wobei der Sender (21) und der Empfänger (22) von den Verschiebungsmitteln getragen werden.

8. Vorrichtung nach den Ansprüchen 6 und 7, wobei eine der Backen den Sender (21) und die andere der Backen den Empfänger (22) trägt, wobei die Zange (15) so ausgebildet ist, dass, wenn die Backen die Verschlussvorrichtung (8) einspannen, sich der Sender (21) und der Empfänger (22) an entgegengesetzten Enden der Bohrung (12) erstrecken.

9. Vorrichtung nach Anspruch 1, wobei die Verschlusskappe (2) an der Verschlussvorrichtung (8) beweglich gelagert ist und im Betrieb von den Verschiebungsmitteln verschoben wird, um die Verschlussvorrichtung in die Öffnungsstellung und die Schließstellung zu bringen.

10. Vorrichtung nach Anspruch 1, wobei eine die Ausflussöffnung (3) umfassende Seite der Verschlusskappe (2) eine Nut (7) umfasst, wobei die Verschlussvorrichtung (8) gegenüberliegende Ränder (10) hat, die gleitend in die Nut eingreifen.

11. Vorrichtung nach Anspruch 1, wobei sich die Bohrung (12) zu beiden Seiten der Öffnung (9) der Verschlussvorrichtung (8) im Wesentlichen in einer Verschiebungsrichtung der Verschlussvorrichtung relativ zur Verschlusskappe (2) erstreckt.

12. Verschlusskappe (2) für eine Vorrichtung nach einem der vorhergehenden Ansprüche, wobei eine Innenfläche der Verschlusskappe mit einem Innengewinde versehen ist, um mit einer mit einem Außengewinde versehenen Außenfläche eines Halses (4) des Behälters (1) zusammenzuwirken.

13. Arbeitsstation, umfassend eine Vorrichtung zur Abgabe eines Pulvers nach einem der vorhergehenden Ansprüche.

14. Arbeitsstation nach Anspruch 13, umfassend ferner eine Vorrichtung zur Abgabe eines Lösungsmittels zum Abgeben einer Lösungsmittelmenge, eine Vorrichtung zur Abgabe von Kappen zum Verschließen einer Flasche, die das Pulver und das Lösungsmittel in sich aufgenommen hat, wobei die Mittel zur relativen Verschiebung der Verschlusskappe und der Verschlussvorrichtung derart in der Arbeitsstation ausgebildet sind, dass sie in der Arbeitsstation mindestens eine aus dem Behälter, der Verschlusskappe und der Verschlussvorrichtung gebildete Einheit von einer Vorrichtung zu einer anderen verschieben.

## Claims

1. A powder dispensing device comprising at least one storage reservoir (1) which is provided with a cap (2) comprising a flow hole (3) for the powder, the device being **characterized in that** it comprises:
- a closure member (8) which is provided with an opening (9) and which is mounted so as to be movable relative to the cap between a closure position which prevents a flow of the powder and an open position which allows the flow of the powder through the opening of the closure member, a bore (12) extending through the closure member so as to extend at one side and the other of the opening of the closure member in a direction which is substantially transverse relative to the flow of the powder;
- relative displacement means of the cap and the closure member in order to move the closure member into the two positions thereof, those means being connected to a control unit (20) which is connected to contactless detection means of the flow of the powder, the detection means comprising, at a first end of the bore of the closure member, at least one transmitter (21) of a wave in the bore and, at a second end of the bore, at least one receiver (22) for detecting the wave transmitted.

2. The device as claimed in claim 1, wherein the flow hole (3) is circular and, in accordance with a plane of section normal relative to the flow direction of the powder, the opening (9) of the closure member (8) has a circular cross-section.

3. The device as claimed in claim 2, wherein the opening (9) has a circular cross-section which is substantially identical to the flow hole (3) in the region of a face of the closure member (8) which is opposite the cap (2).

4. The device as claimed in claim 1, wherein the closure member (8) is mounted so as to be movable on the cap (2) between the open position and the closure position and is displaced during operation by the displacement means between those positions.

5. The device as claimed in claim 4, wherein the closure member (8) is mounted so as to be movable in translation on the cap (2) in a displacement direction which is transverse relative to the flow direction of the powder.

6. The device as claimed in claim 4, wherein the displacement means comprise a set of pincers (15) having parallel jaws, each jaw being intended to cooperate with a lateral face opposite the closure member (8) so as to clamp the closure member between the two jaws.

7. The device as claimed in claim 1, wherein the transmitter (21) and the receiver (22) are carried by the displacement means.

8. The device as claimed in claims 6 and 7, wherein one of the jaws carries the transmitter (21) and the other of the jaws carries the receiver (22), the set of pincers (15) being arranged so that, when the jaws clamp the closure member (8), the transmitter (21) and the receiver (22) extend at the opposite ends of the bore (12).

9. The device as claimed in claim 1, wherein the cap (2) is mounted so as to be movable on the closure member (8) and is displaced during operation by the displacement means in order to bring the closure member into the open position and the closure position.

10. The device as claimed in claim 1, wherein a face of the cap (2) comprising the flow hole (3) comprises a groove (7), the closure (8) having opposite edges (10) which are slidingly engaged in the groove.

11. The device as claimed in claim 1, wherein the bore (12) extends at one side and the other of the opening (9) of the closure member (8) substantially in a displacement direction of the closure member relative to the cap (2).

12. A cap (2) for a device as claimed in one of the preceding claims, wherein an internal surface of the cap is tapped in order to cooperate with a threaded external surface of a neck (4) of the reservoir (1).

13. A workstation comprising a powder device as claimed in one of the preceding claims.

14. The workstation as claimed in claim 13, further comprising a device for dispensing a solvent for dispensing a quantity of solvent, a device for dispensing tops for closing a flask which has received powder and solvent, the relative displacement means of the cap and the closure member being arranged in the workstation in order to displace in the workstation at least one assembly formed by the reservoir, the cap and the closure member from one device to another.
